# EUROPEAN PATENT SPECIFICATION

(11) **EP 1 138 989 B1**
(45) Date of publication and mention of the grant of the patent: **17.08.2005**
(21) Application number: 01104405.4
(22) Date of filing: 26.02.2001
(51) Int. Cl.: F16K 7/12, F16K 31/122, G01M 3/18, G01M 3/04

(54) **Diaphragm valve**
Membranventil
Robinet à membrane

(30) Priority: 31.03.2000 JP 2000096332; 10.05.2000 JP 2000137064
(43) Date of publication of application: 04.10.2001
(60) Divisional application: 04015521.0
(73) Proprietor: Toyo Stainless Steel Industries Co., Ltd., Tsuyama-shi, Okayama (JP)
(72) Inventor: Iritani, Masao, 1170-9, Kusakabe, Tsuyama-shi, Okayama (JP); Ozawa, Kaoru, 1170-9, Kusakabe, Tsuyama-shi, Okayama (JP); Tateishi, Toru, 1170-9, Kusakabe, Tsuyama-shi, Okayama (JP)
(74) Representative: HOFFMANN - EITLE

(56) References cited:
- EP-A- 0 882 921
- DE-A- 3 123 028
- FR-A- 2 287 633
- FR-A- 2 373 734
- FR-A- 2 740 873
- US-A- 2 988 322
- US-A- 4 901 751
- PATENT ABSTRACTS OF JAPAN vol. 1998, no. 11, 30 September 1998 (1998-09-30) & JP 10 169802 A (SMC CORP), 26 June 1998 (1998-06-26)

## Description

### BACKGROUND OF THE INVENTION

### Field of the Invention

The present invention relates to a diaphragm valve to be used for opening and closing a flow path of a fluid piping, such as various liquid piping in food industry, pharmaceutical industry and so forth. FR 2 373 734 discloses such a diaphragm valve.

### Description of the Related Art

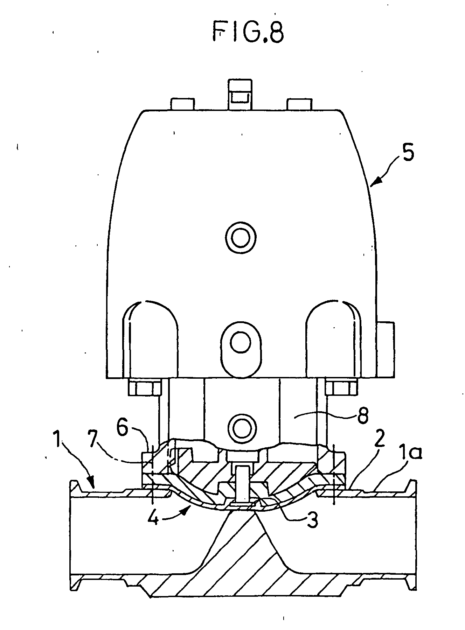

Fig. 8 shows the conventional diaphragm valve. The diaphragm valve is constructed by fixing a peripheral edge portion on a surface side of a diaphragm 4 arranged in opposition to a valve seat 3 which is arranged within a valve body 1, on an annular diaphragm mounting seat 2 provided on a side wall portion 1a of the valve body, for opening and closing a flow path by moving the surface side of the diaphragm 4 toward and away from the valve seat 3 by driving in forward and reverse direction an actuation shaft of a valve operating portion 5 connected to a central position on a back surface side of the diaphragm 4. The valve operating portion 5 is formed with an air cylinder. A piston rod of the air cylinder serves as the actuation shaft. The air cylinder is mounted on the valve body 1 via a bracket 8.

As shown in Fig. 8, in the conventional diaphragm valve, the peripheral edge portion of the diaphragm 4 is fixed to the diaphragm mounting seat 2 by clamping the peripheral edge portion of the diaphragm between the diaphragm mounting seat 2 and a bracket mounting flange 6 of the valve operating portion 5 and by tightening four bolts 7 through the flange 6, the peripheral portion of the diaphragm 4 and the mounting seat 2. If tightening force of the bolts 7 is small, a force depressing the peripheral portion of the diaphragm onto the mounting seat lacks to cause leakage of a liquid. If the tightening force of the bolts 7 is too large, a force for depressing the peripheral edge of the diaphragm locally becomes large in the portion around the bolts 7 to form gaps between the diaphragm 4 and the mounting seat 2 between adjacent bolts 7 to cause leakage of the liquid. Therefore, adjustment of tightening force is difficult. Furthermore, there is personal error in tightening operation to cause significant difficulty in property fixing the peripheral portion of the diaphragm 4 onto the diaphragm mounting seat 2.

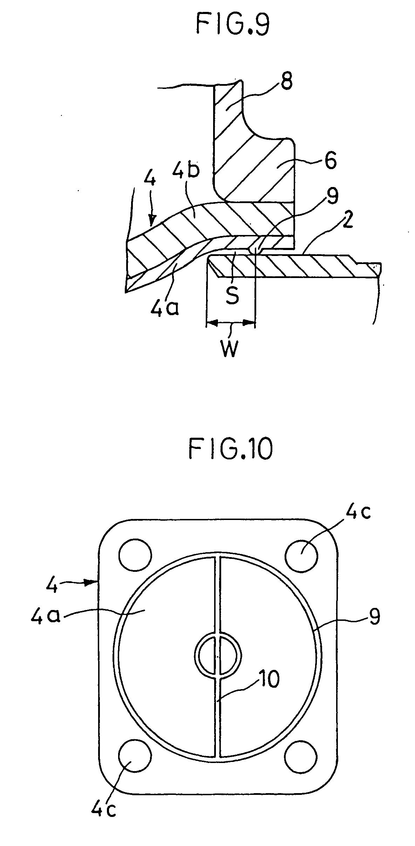

On the other hand, as shown in Fig. 9, the diaphragm 4 is consisted of a surface side membrane 4a of about 1 mm thick made of fluorine containing resin having superior chemical resistance, high water resistance and surface slip characteristics, such as Teflon (polytetrafluoroethylene: Registered Trademark of Du Pont), and a back surface side membrane 4b stacked on the backside surface, made of rubber and backing up the surface side membrane 4a. The rubber back surface side membrane 4b causes little thermal expansion and thermal shrinking in response to temperature variation. On the other hand, the surface side membrane 4a of fluorine containing resin, such as Teflon has a property to expand up to a certain temperature and to cause shrinking at higher temperature. Therefore, sufficient shrinking margin W is provided for a peripheral edge portion of the surface side membrane 4a to be mounted on the mounting seat 2 of the valve body 1.

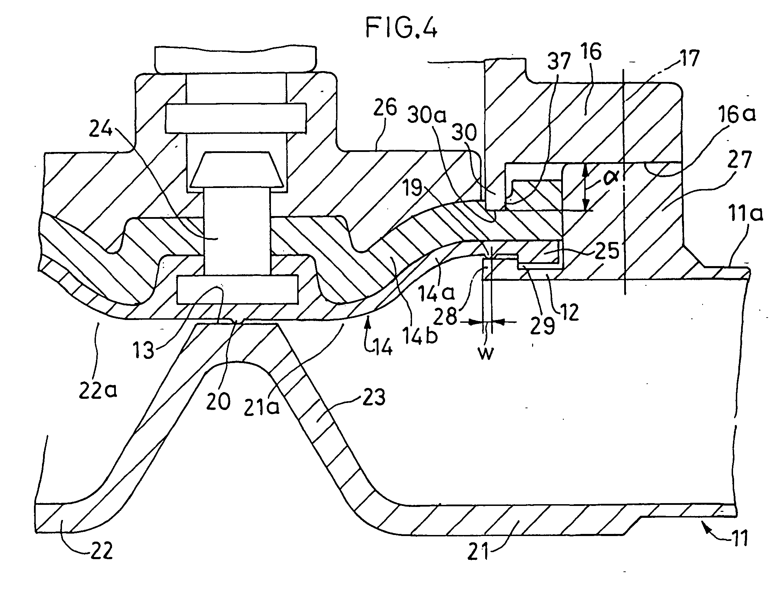

That is, as shown in Fig. 10, on the surface side peripheral edge portion of the surface side membrane 4a, an annular ridge 9 is formed along the peripheral edge portion for enhancing sealing effect with the diaphragm mounting seat 2 and the valve seat 3. Also, a linear ridge 10 extending in diametrical direction of the annular ridge 9 for the valve seat, is provided. A gap between the annular ridge 9 for establishing a seal between the diaphragm 4 and the diaphragm mounting seat 2 and an inner end edge of the diaphragm mounting seat 2 is the shrinking margin W. Thus, as can be appreciated from Fig. 9, if the shrinking margin W is wide, a gap S formed between the surface, liquid contacting surface of the surface side membrane 4a and the seat surface of the diaphragm mounting seat 2 becomes deep to increase tendency of penetration and trapping of the liquid therein to cause difficulty of washing. When the liquid is a food, such as milk, it becomes quite insanitary. It should be noted that, in Fig. 10, 4c is a bolt insertion holes provided at four corners of the diaphragm 4.

### SUMMARY OF THE INVENTION

The present invention has been worked out in view of the problems set forth above. It is an object of the present invention to provide a diaphragm valve which can properly mount a peripheral portion of a diaphragm over the entire periphery and certainly establish a seal between the peripheral portion on a surface side of the diaphragm and a diaphragm mounting seat for preventing leakage of a liquid.

Another object of the present invention is to provide a diaphragm valve which can minimize a shrinking margin provided on a surface side membrane of the diaphragm, and can make a gap formed between a liquid contacting surface of the surface side membrane and a seat surface of the diaphragm mounting seat to facilitate washing of the gap.

According to the present invention, a diaphragm valve fixing a peripheral edge portion on a surface side of a diaphragm arranged in opposition to a valve seat within a valve body, on an annular diaphragm mounting seat provided in a predetermined portion of the valve body and driving an actuation shaft of a valve operating portion connected to a central portion on back surface side of the diaphragm back and forth in an axial direction to abut and release the surface side of diaphragm with respect to the valve seat for opening and closing a flow passage, comprising:
the diaphragm being consisted of a surface side membrane of fluorine containing resin and a back surface side membrane of rubber laminated on back surface of the surface side membrane;
the surface side membrane having an annular ridge portion extending along a peripheral edge portion and an annular projection extending circumferentially at the inner side of the annular ridge portion; and
the diaphragm mounting seat having an annular projection on inside of the peripheral edge thereof;
an annular base provided to project from a seat surface of the mounting seat for a predetermined height and connected with a bracket mounting flange on the side of the valve operating portion by bolts;
an annular groove extending along outer periphery of the annular projection for engaging with the annular ridge portion for abutting the annular projection onto the annular projection of the diaphragm mounting seat; and
a diaphragm retaining portion formed integrally with the flange for compressing the peripheral edge portion of the back surface side membrane and the surface side membrane of the diaphragm with a constant pressure so that the flange and the base are connected by the bolts in the condition where the diaphragm is compressed onto the base with the constant pressure by the diaphragm retaining portion.

In the preferred construction, a retaining surface of the diaphragm retaining portion is located at a position projecting from an abutting surface of the bracket mounting flange abutting onto the annular base for a predetermined length. The diaphragm may be showed into circular shape. The valve operating portion may be formed with a cylinder connected to a bracket mounted on the side of the valve body, a piston rod of the cylinder forms the actuation shaft.

It is also preferred that the valve operating portion (45) comprises a threaded shaft (38) threadingly engaged with the bracket (18) mounted on the side of the valve body (11) and a handle (39) operated for driving the threaded shaft (38) for rotation, and the threaded shaft (38) serves as the actuation shaft.

Other objects will become more clear from the discussion given hereinafter.

### BRIEF DESCRIPTION OF THE DRAWINGS

The present invention will be understood more fully from the detailed description given hereinafter with reference to the accompanying drawings of the preferred embodiment of the present invention, which, however, should not be taken to be limitative to the present invention, but are for explanation and understanding only.

In the drawings:
Fig. 1 is a longitudinally half sectioned front elevation of the preferred embodiment of a diaphragm valve according to the present invention;
Fig. 2 is a bottom view of the diaphragm valve of Fig. 1;
Fig. 3A is a front elevation of the diaphragm;
Fig. 3B is a section taken along line X - X of Fig. 3A;
Fig. 4 is an enlarged partial section of the diaphragm valve shown in Fig. 1;
Fig. 5 is a longitudinally half sectioned front elevation of a diaphragm valve having a manually operable valve operating portion;
Fig. 6 is a half sectioned front elevation of a background art diaphragm valve with a leakage detection sensor;
Fig. 7 is an enlarged partial section of the diaphragm valve shown in Fig. 6;
Fig. 8 is an enlarged partially sectioned front elevation of the conventional diaphragm valve;
Fig. 9 is an enlarged partial view of the conventional diaphragm valve shown in Fig. 8; and
Fig. 10 is a front elevation of the conventional diaphragm valve.

### DESCRIPTION OF THE PREFERRED EMBODIMENT

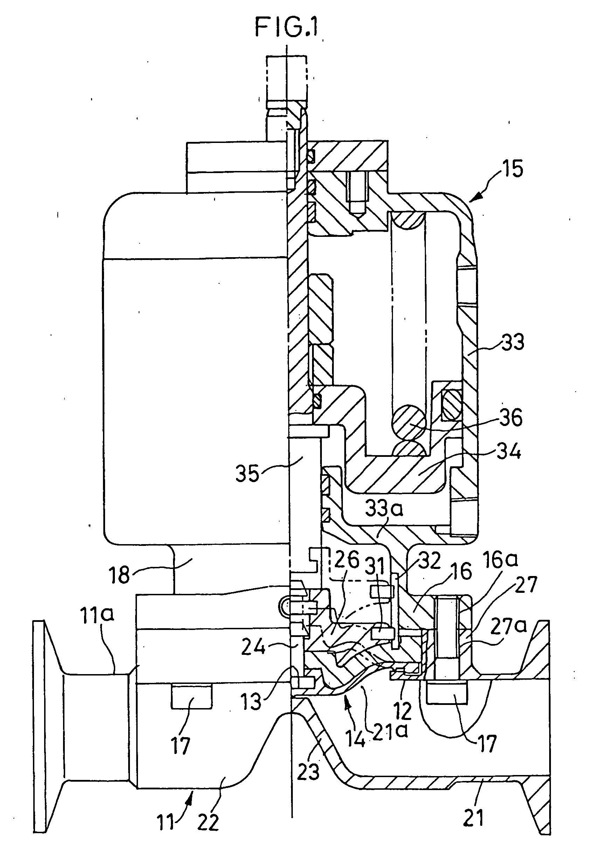

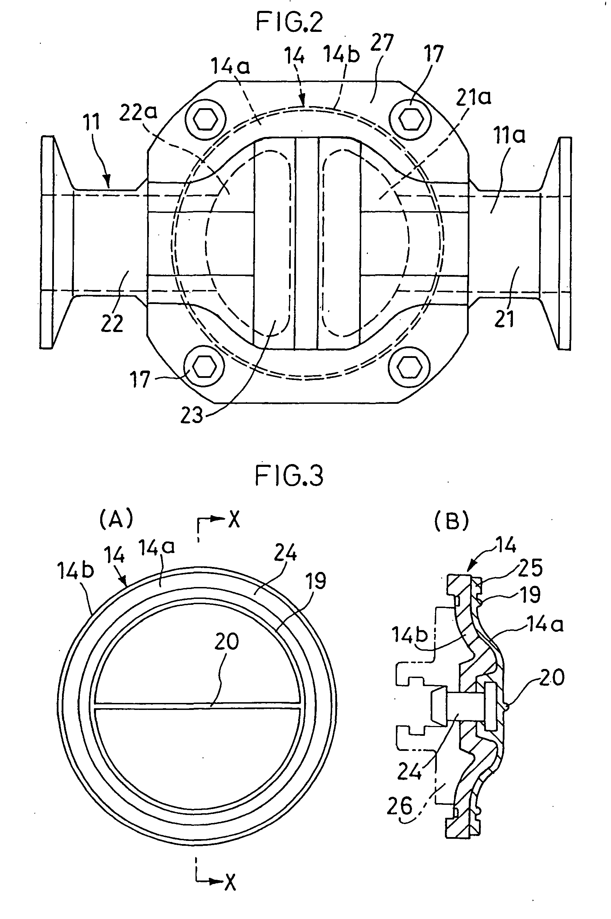

Fig. 1 is a longitudinally half sectioned front elevation of the preferred embodiment of the diaphragm valve according to the present invention, and Fig. 2 is a bottom view thereof. In Figs. 1 and 2, the reference numerals 11 denotes a cylindrical valve body. At a central portion in the longitudinal direction of the valve body 11, an inwardly projecting dam portion 23 serving as a valve seat 13 is provided. The reference numeral 12 denotes a diaphragm mounting seat for mounting a peripheral edge portion on a surface side of a diaphragm 14. The diaphragm mounting seat 12 is formed on a side wall portion 11a of the valve body 11. On the inside of the diaphragm mounting seat 12, valve openings 21a and 22a communicated with inlet and outlet pipe portions 21 and 22 formed on opposite sides across the dam portion 23.

The diaphragm 14 is consisted of a surface side membrane 14a formed of fluorine containing resin and a back surface side membrane 14b formed of rubber stacked on a back surface side of the surface side membrane 14a. Both membranes 14a and 14b are connected by a connecting shaft 24 mounted in the central portion thereof. As shown in Fig. 3, the surface side membrane 14a is formed into a disc shaped configuration of about 1 mm thick of Teflon as fluorine containing resin. On the peripheral edge portion of the surface, an annular ridge portion of quadrangular cross section is projected. Adjacent the inner periphery of the annular ridge portion 25, an annular projection 19 is projected. Also, a linear projection 20 diametrically connecting the annular projection 19 is projected. The back surface side membrane 14b is formed of a synthetic resin strong against temperature variation, into a disc shaped configuration with about 4 mm thick and a slightly greater diameter than that of the surface side membrane 14a. On the back surface of the back surface side membrane 14b, a metallic retainer 26 is arranged. The retainer 26, the back surface side membrane 14b and the surface side membrane 14a are integrally connected via the connecting shaft 24 so as not to cause relative angular displacement with respect to each other.

As shown in Figs. 1 and 4, on the outer periphery side of the diaphragm mounting seat 12, an annular base 27 connected with a bracket mounting flange 16 on the side of a operating portion 15 by means bolts is projected at a predetermined height. On the other hand, adjacent the inner periphery of the annular base 27, an annular projection 28 is projected upwardly to define an annular groove 29 adjacent the outer periphery thereof in cooperation with the annular base 27. In this case, a seat surface of the diaphragm mounting surface 12 is substantially the upper surface of the annular projection 28.

On the other hand, on the bracket mounting flange 16, an annular diaphragm retaining portion 30 is projected from the inner peripheral portion thereof. A retaining surface 30a at the lower end of the diaphragm retaining portion 30 is projected downwardly from an abutting surface 16a of the bracket mounting flange 16 for a length α, as shown in Fig. 4. By forming an annular body by projecting the diaphragm retaining portion 30 from the abutting surface 16a of the flange 16, the peripheral portion of the diaphragm 14 can be effectively compressed. The projecting length α of the diaphragm retaining portion 30 is set in a length to compress the peripheral portion of the diaphragm 14 to firmly fitting the annular projection 19 onto the annular projection 28 with a constant pressure in the condition where the peripheral portion of the diaphragm 14 having a predetermined thickness is engaged with the diaphragm mounting seat 12 as shown. In setting the projecting length α of the diaphragm retaining portion 30, a projecting height of the annular projection 28 from the diaphragm mounting seat 12, a thickness of the diaphragm 14 and a elastic module of the diaphragm 14 are taken into account.

An engaging groove 32 is formed in the diaphragm retaining portion 30 for receiving an anti-rotation pin 31 projected from a retainer 26. the anti-rotation pin 31 serves not only for preventing the diaphragm 14 from rotating but also as positioning means for properly positioning the linear projection 20 projecting from the surface of the surface side membrane 14a on the valve seat 13. On the other hand, in the bracket mounting flange 16 and the annular base 27 on the side of the valve body 11, bolt holes 16a and 27a are formed at four portions, respectively. The diaphragm retaining portion 30 may be provided in a form detachable from the bracket mounting flange 16.

As shown in Fig. 1, the valve operating portion 15 is formed with an air cylinder connected to a bracket 18 formed with the flange 16 at the lower end. The cylinder 15 is constructed with a cylinder body 33, a piston 34 and a piston rod 35 reciprocating in axial direction integrally with the piston 34. The piston rod 35 serves as the actuation shaft of the diaphragm valve. The lower end piston rod (actuation shaft) 35 is connected to the retainer 26 so that the diaphragm 14 is forms to vary mode between a valve closing mode where the diaphragm 14 is in contact with the valve seat 13 as shown by the solid line of Fig. 1 and a valve opening mode where the diaphragm 14 is placed away from the valve seat 13 as shown by phantom line in Fig. 1 by reciprocal motion of the piston rod 35 in the axial direction. As shown in Fig. 1, a part of the bracket 18 forms a lower end wall portion 33a of the cylinder body 33. In Fig. 1, the reference numeral 36 denotes a coil spring normally biasing the piston toward valve closing side.

Next, discussion will be given for a method for mounting and securing the diaphragm 14 onto the diaphragm mounting seat 12 of the valve body 11. At first, in the condition where the bracket 18 is removed from the valve body 11, the diaphragm 14 is fitted onto the diaphragm mounting seat 12 surrounded the outer periphery by the annular base 27 to engage the annular ridge portion 25 into the groove 29 formed along the outer side of the annular projection 28 on the side of the mounting seat 12, to abut the annular projection 19 onto the annular projection 28 of the mounting seat 12, and to abut the linear projection 20 onto the valve seat 13. From this condition, with mounting the flange 16 of the bracket 18 on the annular base 27, the lower end portion of the diaphragm retaining portion 30 is pushed into an annular groove 37 formed on the back surface side of the back surface side membrane 14b. Then, bolt 17 is threaded into the threaded hole 16a of the flange 16 from the threaded hole 27a of the annular base 27 to connect the flange 16 with the annular base 27 by bolts.

Thus, by fastening the flange 16 onto the annular base 27 by four bolts 17, the diaphragm retaining portion 30 compresses the peripheral portion of the diaphragm 14 over the entire periphery to depress the annular projection 19 of the surface side membrane 14a onto the annular projection 28 of the diaphragm mounting seat 12, and whereby to establish complete seal between the surface side membrane 14a and the annular projection 28 of the mounting seat 12. At this time, a pressure applied to the peripheral portion of the diaphragm 14 by the diaphragm retaining portion 30 is constant as set by the projecting height of the annular projection 19 from the diaphragm mounting seat 12, the thickness of the diaphragm 14 and the elastic modules of the diaphragm 14. Therefore, what is required is to tighten the bolts 17 to fasten the flange 16 onto the annular base 27. Accordingly, over-tightening or lack of tightening of the bolts 17 will never be caused. Also, irrespective of the person who tighten the bolt, no personal error in the tightening operation will be caused to certainly fix the peripheral edge portion of the diaphragm portion 14 over the entire periphery of the diaphragm seat 12 to assure prevention of liquid leakage.

On the other hand, with the mounting structure of the diaphragm 14 set forth above, the surface side membrane 14a of the diaphragm has the annular ridge portion 25 projected along the peripheral edge portion and the annular projection 19 extending circumferentially at inner side of the annular ridge portion 25. The annular ridge portion 25 on the surface side membrane 14a is engaged with the annular groove 29 formed on the outer circumference of the annular projection 28 to abut the annular projection 19 of the surface side membrane 14a onto the annular projection 28 of the diaphragm mounting seat 12. Therefore, even if the surface side membrane 14a formed of fluorine containing resin, such as Teflon or the like, causes shrinking by the high temperature liquid flowing through the flow path, the annular ridge portion 25 of the surface side membrane 14a restricts the annular groove 29 formed on the outer circumference of the mounting seat 28 to restrict shrinking of the surface side membrane 14a. Accordingly, as shown in Fig. 4, the annular projection 19 of the surface membrane 14a can be arranged in the vicinity of the inner peripheral edge of the diaphragm mounting seat 12 as close as possible. Thus, a shrinking margin w as a gap between the annular projection 19 of the surface side membrane 14a and the mounting seat 12 can be set as narrow as possible.

Since the shrinking margin w is quite narrow as possible, a gap may not be formed between the surface of the surface side membrane 14a and the diaphragm mounting seat. Even when the gap is formed, the gap is shallow to easily accumulate a liquid to facilitate cleaning and is quite sanitary. On the other hand, since the peripheral edge portion of the diaphragm 14 is not bolted by providing the bolt holes as in the prior art in order to mounting and fixing the diaphragm 14 on the diaphragm mounting seat 12, the diaphragm 14 can be formed into circular shape and whereby to permit saving of the material.

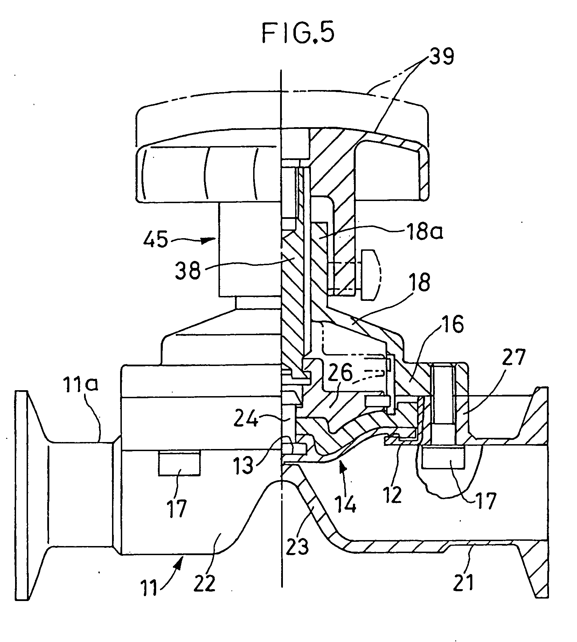

Fig. 5 shows a diaphragm valve having a manually operable valve operating portion 45. In the construction of the valve operating portion 45, like components to those of the diaphragm valve shown in Figs. 1 to 4 will be identified by like reference numerals and redundant discussion for such common component will be omitted in order to keep the disclosure simple enough to facilitate clear understanding of the present invention. The valve operating portion 45 is constructed with a cylindrical threaded portion 18a at the upper end portion of the bracket 18 mounted on the side of the valve body 11, a threaded shaft 38 to meshing engagement with the cylindrical threaded portion 18a and a handle to be operated manually for rotating the threaded shaft 38. The threaded shaft 38 serves as the actuation shaft. Accordingly, by rotating the threaded shaft by manually gripping the hand, the threaded shaft is shifted back and forth in axial direction to vary the mode of the diaphragm between the valve closing mode abutting onto the valve seat 13 and the valve opening mode released away from the valve seat 13.

With the preferred embodiment of the diaphragm valve according to the present invention set forth above, by tightening the bolts to fasten the bracket mounting flange onto the annular base of the valve body, the diaphragm retaining portion uniformly compresses the entire circumference of the peripheral edge portion of the diaphragm to press the peripheral edge portion onto the diaphragm mounting seat. Thus, a complete seal can be established between the peripheral edge portion on the surface side of the diaphragm and the diaphragm mounting seat. At this time, the pressure to be exerted on the peripheral edge portion of the diaphragm through the diaphragm retaining portion can be a constant pressure preliminarily set in consideration of the projecting height of the annular projection from the diaphragm mounting seat, the thickness of the diaphragm and the elastic modules of the diaphragm. Therefore, it is only required to fasten the flange onto the annular base by tightening the bolts so as not to cause over tightening or lack of tightening, and not to cause personal error in tightening operation. Thus, the peripheral edge portion of the diaphragm can be properly fixed on the diaphragm mounting seat over the entire circumference to certainly prevent liquid leakage.

On the other hand, with the diaphragm valve according to the present invention, since the diaphragm is provided with the annular ridge portion extending along the peripheral edge portion and the annular projection extending circumferentially at the inner side of the annular ridge portion, and the diaphragm mounting seat is provided with the annular projection. In the annular groove defined on the outer circumference of the annular projection, the annular projection of the diaphragm is engaged to abut the annular ridge portion of the diaphragm onto the annular projection of the diaphragm mounting seat. Therefore, even if the surface side membrane 14a formed of fluorine containing resin, such as Teflon or the like, causes shrinking by the high temperature liquid flowing through the flow path, the annular ridge portion of the surface side membrane restricts the annular groove formed on the outer circumference of the mounting seat to restrict shrinking of the surface side membrane. Accordingly, the annular projection of the surface membrane can be arranged in the vicinity of the inner peripheral edge of the diaphragm mounting seat as close as possible. Thus, a shrinking margin as a gap between the annular projection of the surface side membrane 14a and the mounting seat can be set as narrow as possible. Since the shrinking margin is quite narrow as possible, a gap may not be formed between the surface of the surface side membrane 14a and the diaphragm mounting seat. Even when the gap is formed, the gap is shallow to easily accumulate a liquid to facilitate cleaning and is quite sanitary.

On the other hand, as shown in the embodiment of the present invention, the retaining surface of the diaphragm retaining portion can effectively compress the peripheral edge portion of the diaphragm since the diaphragm retaining portion is placed at the position projected for a predetermined length from the abutting surface of the bracket mounting flange abutting onto the annular base.

Furthermore, as shown in the embodiment of the present invention, since the diaphragm can be formed into circular shape material to form the diaphragm can be reduced to achieve material saving.

Furthermore, as shown in the embodiment of the present invention, when the valve operating portion is formed with the cylinder connected with the bracket mounted on the side of the valve body, driving of the actuation shaft back and force in axial direction can be done automatically. Also, when the valve operating portion is formed with the threaded shaft threadingly engaged with the bracket mounted on the side of the valve body side, and the handle rotatingly operating the threaded shaft, back and forth driving of the actuation shaft in the axial direction can be simply and easily operated manually.

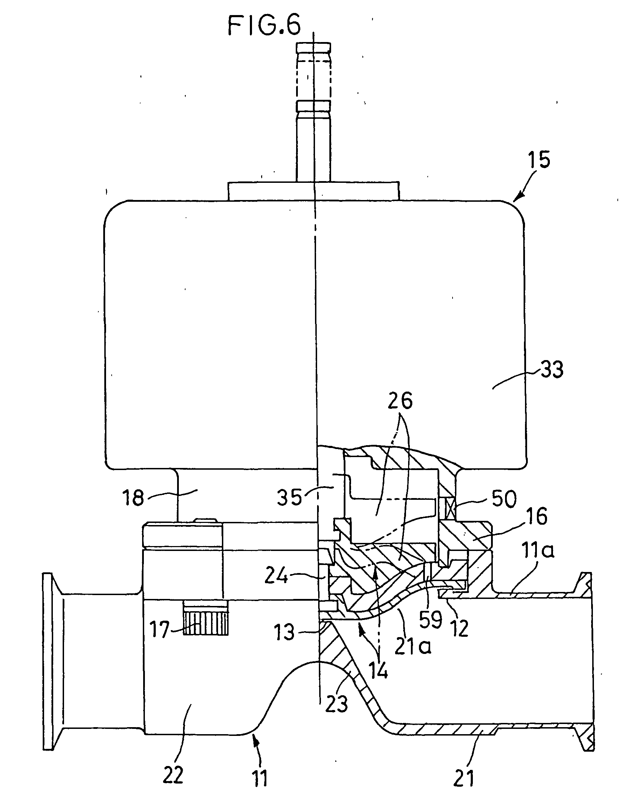

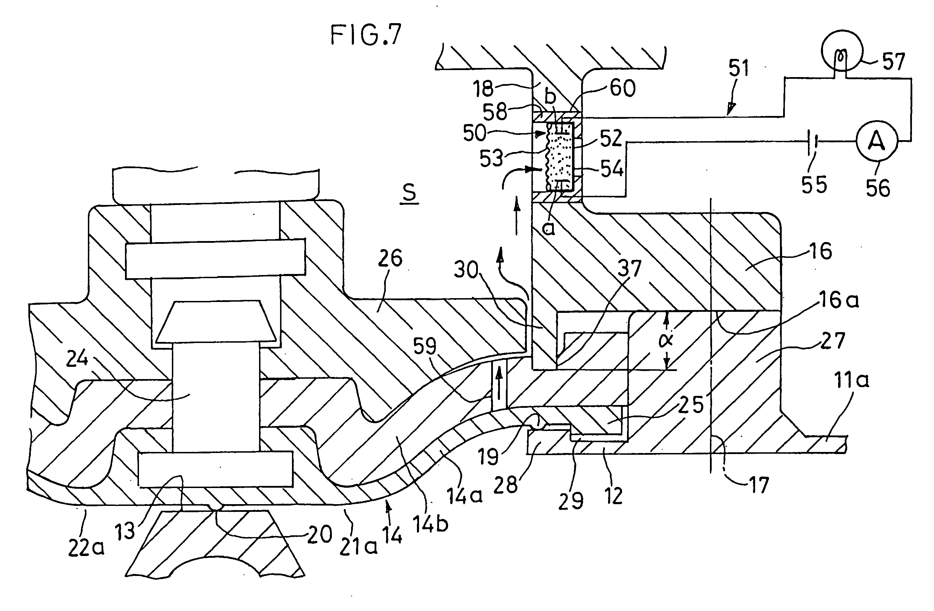

Figs. 6 and 7 show a background art diaphragm valve, in which a liquid leakage detection sensor is provided in the diaphragm valve. Namely, in the conventional diaphragm valve, the diaphragm forming the valve body is mounted at a position opposing to the valve seat in the valve body in a manner isolating the surface side contacting with the liquid and the back surface side. By back and forth driving of the actuation shaft connected to the central portion on the back surface side in axial direction, the surface side of the diaphragm moved toward and away from the valve seat to open and close the flow passage. Thus, in such diaphragm valve, the diaphragm may seal the surface side and the back surface side having the actuation mechanism with the fastening portion of the peripheral edge portion to constantly contact the liquid only with the surface side. Also, valve operation can be performed only by deformation of the diaphragm so as not to require any sliding contact portion, such as a valve shaft portion of various other valves, which easily cause leakage of the liquid. Thus, for high sealing ability in the valve portion, it is particularly useful for the field of food industry, pharmaceutical industry and so forth which requires high reliability in safety and sanitary.

In the meanwhile, when breakage is caused in the diaphragm of the diaphragm valve employed in a manufacturing line of the liquid, namely, in a pure water line or the like, it becomes necessary to have a function for detecting the breakage in order to avoid continuous production of defective liquid. Conventionally, it has been employed a method to regularly exchange the diaphragm at earlier timing before occurrence of breakage of the diaphragm, to be not economical to dispose the diaphragm of the condition usefully for sufficiently long period by early exchange.

On the other hand, as the conventional leakage detection sensor provided in the diaphragm valve, it have been known a sensor, in which a conductive rubber layer is provided in the diaphragm for electrically detecting liquid leakage. In case of the pure water line in the pharmaceutical industry, or the like, because of quite low conductivity of the pure water, liquid leakage cannot be detected accurately and thus is poorly practical.

The background art diaphragm valve shown in Figs. 6 and 7, in view of the problem set forth above, even in the case of the liquid having quite low conductivity, such as the pure water, it becomes possible to provide the liquid leakage detection sensor of the diaphragm which can be certain detect liquid leakage.

Discussion will be given for the diaphragm with the liquid leakage sensor with reference to Figs. 6 and 7. In the following discussion, like components to those of the former embodiment diaphragm valve will be identified by like reference numerals and redundant discussion for such common component will be omitted in order to keep the disclosure simple enough to facilitate clear understanding of the present invention. It should be noted that, in the following discussion, the construction unique in the shown background art diaphragm valve will be discussed primarily. As shown in Figs. 6 and 7, the liquid leakage sensor assembly includes a sensor body 50 inserted within an opening portion 60 provided at a predetermined position in the bracket 18, and a detection circuit 51 formed by leading outside of the bracket 18 from the sensor body 50. Also, in the back surface side membrane 4b serving as the back-up membrane of the diaphragm, a leakage announcing conduit 59 is formed.

As shown in Fig. 7, the sensor body 50 is constructed with a sealed casing 54 formed with a box-shaped casing body 52 opening in one side surface, an infiltration membrane 53 arranged in the opening surface side of the casing body 52, a strong electrolyte filled in the sealed casing 54, and a pair of electrodes a and b respectively serving as anode and cathode arranged in opposition. The infiltration membrane 53 is a membrane arranged in the opening surface side of he casing body 52 so as to permit penetration of liquid from outside of the sealed casing 54 into the inside but block leakage of the liquid within the casing 54 to the outside.

The strong electrolyte to be filled within the sealed casing 54 of the sensor body 50 may be NaCl (sodium chloride to be used as a salt or the like). However, other material, such as NaOH (caustic soda, sodium hydroxide and the like) may also be used. As shown in Fig. 7, the detection circuit 51 is an electric circuit including the electrodes a and b arranged within the sealed casing 54, a power source 55 which is formed with a battery, an ammeter 56 and a lamp 57.

Upon mounting of the sensor body 50 onto the opening portion 60 of the bracket 18, the casing body 52 is mounted and fixed via a sealing member 58 in the condition where the infiltration membrane 53 is located at a position contacting with the liquid leaking to he back surface side of the diaphragm 14.

In the liquid leakage detection sensor constructed as set forth above, assuming that the shown diaphragm valve is disposed within the pure water line, if the surface side membrane 14a causes breakage, the water (pure water) leaking to the back surface side through the broken portion of the surface of the surface side membrane 14a penetrates into a gap between the back surface of the surface side membrane 14a and the surface of the back surface side membrane 14b. Then, the leaking liquid flows into the inside of the bracket 18, namely, into the space portion S on the back surface side of the leakage announcing conduit 59 of the back surface side membrane 14b to be accumulated therein, through the leakage announcing conduit 59. The leaked water accumulated in the space portion S passes through the infiltration membrane 53 arranged in the sealed casing 54 of the sensor body 50 and then is mixed with NaCl within the sealed casing 54. Once the leaking water is admixed with NaCl, NaCl is dissociated into Na ion (+) and Cl ion (-), namely electrolytically dissociated, for high dielectric constant of the water. Furthermore, since NaCl is strong electrolyte, it is completely dissociated in the water (no molecule which is not dissociated will be remained).

When electrolytic dissociation of NaCl is caused in the leaked water penetrated into the sealed casing 54 of the sensor body 50, as set forth above, dielectric constant of the water is increased to establish conductive state between the electrodes a and b. Conductive state between the electrodes a and b can be detected by turning ON of the lamp 57. Also, a degree of conduction can be seen from an indication of the ammeter 56. Accordingly, occurrence of breakage of the surface side membrane 14a of the diaphragm 14 can be detected by the liquid leakage detection sensor.

With the diaphragm valve with the liquid leakage detection sensor, even in case of the liquid having quite low conductivity, such as pure water, leakage from the surface side membrane 14a can be certainly detected. On the other hand, the diaphragm 14 is consisted of the thin surface side membrane 14a of fluorine containing resin and the thick back-up membrane 14b of rubber stacked on the back surface side. By providing the liquid leakage announcing conduit 59 in the back-up membrane 14b, the water leaking through the broken portion of the surface side membrane 14a immediately flows out to the back surface side of the diaphragm 14 through the liquid leakage announcing conduit 59 to contact with the sensor body 50. Therefore, breakage of the surface side membrane 14a can be detected quickly.

While discussion has been given for detection of leakage of pure water in the pure water line, the liquid leakage sensor can detect not only the pure water but also leakage of liquids other than pure water.

With this diaphragm valve, upon breakage of the diaphragm, the liquid leaking out the backside surface is admixed with the strong electrolyte within the casing through the infiltration membrane of the sensor body to cause electrolytic dissociation of the strong electrolyte to increase electric conductivity of the liquid to detect conductive state of between the electrodes within the casing to detect breakage of the diaphragm. Accordingly, the diaphragm can be used for extended period throughout its life. Particularly, with the liquid leakage sensor, even in case of the liquid having low conductivity, such as pure water, leakage of the liquid due to breakage of the surface side membrane can be certainly detected.

Furthermore, since the diaphragm is formed with the thin surface side membrane of fluorine containing resin and the thick back-up membrane of rubber stacked on the back surface side, and by providing the liquid leakage announcing conduit in the back-up membrane, breakage of the surface side membrane can be detected quickly.

Although the present invention has been illustrated and described with respect to exemplary embodiments thereof, it should be understood by those skilled in the art that the foregoing and various changes, emission and additions may be made therein and thereto, without departing from the scope of the present invention as hereafter claimed.

## Claims

1. A diaphragm valve fixing a peripheral edge portion on a surface side of a diaphragm (14) arranged in opposition to a valve seat (13) within a valve body (11), on an annular diaphragm mounting seat (12) provided in a predetermined portion of said valve body (11) and driving an actuation shaft (34, 38) of a valve operating portion (15, 45) connected to a central portion on the back surface side of said diaphragm back and forth in an axial direction to abut and release the surface side of diaphragm (14) with respect to said valve seat (13) for opening and closing a flow passage, comprising:
an annular base (27) provided to project from a seat surface of said mounting seat (12) for a predetermined height and connected with a bracket mounting flange (16) on the side of said valve operating portion by bolts (17);
a diaphragm retaining portion (30) formed integrally with said flange (16) for compressing the peripheral edge portion of said diaphragm with a constant pressure so that said flange (16) and said base (27) are connected by said bolts (17) in the condition where said diaphragm (14) is compressed onto said base (12) with said constant pressure by said diaphragm retaining portion (30) **characterised by**
said diaphragm (14) being consisted of a surface side membrane (14a) of fluorine containing resin and a back surface side membrane (14b) of rubber laminated on back surface of said surface side membrane (14a);
said surface side membrane 14a having an annular ridge portion (25) extending along a peripheral edge portion and an annular projection (19) extending circumferentially at the inner side of said annular ridge portion (25); and
said diaphragm mounting seat (12) having an annular projection (28) on inside of the peripheral edge thereof; and the diaphragm valve comprising
an annular groove (29) extending along outer periphery of said annular projection (28) for engaging with said annular ridge portion (25) for abutting said annular projection (19) onto said annular projection (28) of said diaphragm mounting seat (12).

2. A diaphragm valve as set forth in claim 1, wherein a retaining surface (30a) of said diaphragm retaining portion (30) is located at a position projecting from an abutting surface of said bracket mounting flange (16) abutting .onto said annular base (27) for a predetermined length.

3. A diaphragm valve as set forth in claim 1, wherein said diaphragm (14) has a circular shape.

4. A diaphragm valve as set forth in claim 1, wherein said valve operating portion (15) is formed with a cylinder connected to a bracket (18) mounted on the side of said valve body (11), a piston rod (35) of said cylinder forming said actuation shaft.

5. A diaphragm valve as set forth in claim 1, wherein said valve operating portion (45) comprises a threaded shaft (38) threadingly engaged with said bracket (18) mounted on the side of said valve body (11) and a handle (39) operated for driving said threaded shaft (38) for rotation, and said threaded shaft (38) serves as said actuation shaft.

## Patentansprüche

1. Membranventil, welches einen umfänglichen Kantenabschnitt an einer Oberflächenseite einer Membran (14) fixiert, welches gegenüber eines Ventilsitzes (13) innerhalb eines Ventilkörpers (11) an einem kreisförmigen Membran-Befestigungssitz (12) angeordnet ist, welcher in einem vorab bestimmten Abschnitt des Ventilkörpers (11) vorgesehen ist, und einen Betätigungsschaft (34, 38) eines Ventil-Betriebsabschnitts (15, 45), der mit einem zentralen Abschnitt an der Seite der hinteren Oberfläche der Membran verbunden ist, nach hinten und vorne in axialer Richtung antreibt, um die Oberflächenseite der Membran (14) mit Bezug auf den Ventilsitz (13) zum Öffnen und Verschließen einer Fließpassage anzulegen und freizugeben, umfassend:
eine kreisförmige Basis (27), die so vorgesehen ist, dass sie von einer Sitzoberfläche des Befestigungssitzes (12) in einer vorab bestimmten Höhe hervorsteht und mit einem Ausleger-Befestigungs-Flansch (16) durch Bolzen (17) an der Seite des Ventil-Betriebsabschnitts verbunden ist;
einen Membran-Rückhalteabschnitt (30), der integral mit dem Flansch (16) zum Komprimieren des umfänglichen Kantenabschnitts der Membran mit einem konstanten Druck ausgeformt ist, so dass der Flansch (16) und die Basis (27) über die Bolzen (17) in dem Zustand verbunden sind, bei dem die Membran (14) auf die..Basis (12) mit dem konstanten Druck durch den Membran-Rückhalteabschnitt (30) komprimiert wird,
**dadurch gekennzeichnet, dass**
die Membran (14) aus einer Oberflächenseiten-Membran (14a) aus Fluor enthaltendem Harz und einer Rückoberflächen-Seitenmembran (14b) mit auf der Rückseite der Oberflächenseiten-Membran (14a) laminiertem Gummi besteht;
die Oberflächenseiten-Membran (14a) einen kreisförmigen Gratabschnitt (25) aufweist, der sich entlang eines umfänglichen Kantenabschnitts erstreckt, sowie einen kreisförmigen Vorsprung (19), der sich umfänglich in der inneren Seite des kreisförmigen Gratabschnitts (25) erstreckt; und
der Membran-Befestigungssitz (12) einen kreisförmigen Vorsprung (28) an der Innenseite von dessen umfänglicher Kante aufweist; und das Membranventil
eine kreisförmige Nut (29) umfasst, die sich entlang des äußeren Umfangs des kreisförmigen Vorsprungs (28) zum Eingriff mit dem kreisförmigen Gratabschnitt (25) zum Anlegen des kreisförmigen Vorsprungs (19) an dem kreisförmigen Abschnitt (28) des Membran-Befestigungssitzes (12) erstreckt.

2. Membranventil wie in Anspruch 1 dargelegt, wobei eine Rückhalteoberfläche (30a) des Membran-Rückhalteabschnitts (30) an einer Position platziert ist, die sich von einer Anlegeoberfläche des Ausleger-Befestigungsflanschs (16), die an der kreisförmigen Basis (27) über eine vorab bestimmte Länge anliegt, hervorsteht.

3. Membranventil wie in Anspruch 1 dargelegt, wobei die Membran (14) eine runde Form aufweist.

4. Membranventil wie in Anspruch 1 dargelegt, wobei der Ventil-Betriebsabschnitt (15) mit einem Zylinder ausgebildet ist, der mit einem Ausleger (18) verbunden ist, der an der Seite des Ventilkörpers (11) befestigt ist, wobei eine Kolbenstange (35) dieses Zylinders den Betätigungsschaft ausbildet.

5. Membranventil wie in Anspruch 1 dargelegt, wobei der Ventil-Betriebsabschnitt (45) einen mit einem Gewinde versehenen Schaft (38) umfasst, der im Gewindeeingriff mit dem Ausleger (18) steht, welcher an der Seite des Ventilkörpers (11) sowie eines Griffs (39), der zum Antreiben des mit einem Gewinde versehenen Schafts (38) betrieben wird, zur Drehung in Eingriff steht, und wobei dieser mit einem Gewinde versehene Schaft (38) als Betätigungsschaft dient.

## Revendications

1. Robinet à diaphragme fixant une partie de bord périphérique sur un côté de surface d'un diaphragme (14) agencé en opposition à un siège de robinet (13) à l'intérieur d'un corps de robinet (11), sur un siège de montage de diaphragme annulaire (12) disposé dans une partie prédéterminée dudit corps de robinet (11) et entraînant un arbre d'actionnement (34, 38) d'une partie d'actionnement de robinet (15, 45) connectée à une partie centrale sur le côté de surface dorsale dudit diaphragme en va-et-vient dans une direction axiale pour amener en butée et libérer le côté de surface du diaphragme (14) par rapport au dit siège de robinet (13) pour ouvrir et fermer un passage d'écoulement, comprenant :
une base annulaire (27) prévue pour dépasser depuis une surface de siège dudit siège de montage (12) sur une hauteur prédéterminée et connectée à une bride de montage de collier (16) sur le côté de ladite partie d'actionnement de robinet par des boulons (17) ;
une partie de retenue de diaphragme (30) formée solidairement avec ladite bride (16) pour compresser la partie de bord périphérique du diaphragme avec une pression constante de sorte que ladite bride (16) et ladite base (27) sont raccordées par des boulons (17) dans la condition où ledit diaphragme (14) est compressé sur ladite base (12) avec ladite pression constante par ladite partie de retenue de diaphragme (30) **caractérisée par**
ledit diaphragme (14) étant constitué d'une membrane de côté de surface (14a) d'une résine contenant de la fluorine et d'une membrane du côté de surface dorsale (14b) de caoutchouc stratifié sur la surface dorsale de ladite membrane de côté de surface (14a) ;
ladite membrane de côté de surface 14a ayant une partie de nervure annulaire (25) s'étendant le long d'une partie de bord périphérique et une protubérance annulaire (19) s'étendant circonférentiellement au niveau du côté interne de ladite partie de nervure annulaire (25) ; et
ledit siège de montage de diaphragme (12) ayant une protubérance annulaire (28) sur l'intérieur de son bord périphérique ; et le robinet à diaphragme comprenant
une rainure annulaire (29) s'étendant le long de la périphérie extérieure de ladite protubérance annulaire (28) pour mise en prise avec ladite partie de nervure annulaire (25) pour mise en butée de ladite protubérance annulaire (19) sur ladite protubérance annulaire (28) dudit siège de montage de diaphragme (12).

2. Robinet à diaphragme selon la revendication 1, dans lequel une surface de retenue (30a) de ladite partie de retenue de diaphragme (30) est positionnée à une position dépassant depuis une surface de butée de ladite bride de montage de collier (16) venant en butée sur ladite base annulaire (27) sur une longueur prédéterminée.

3. Robinet à diaphragme selon la revendication 1, dans lequel ledit diaphragme (14) présente une forme circulaire.

4. Robinet à diaphragme selon la revendication 1, dans lequel ladite partie d'actionnement de robinet (15) est formée avec un cylindre raccordé à un collier (18) monté sur le côté dudit corps de robinet (11), une tige de piston (35) dudit cylindre formant ledit arbre d'actionnement.

5. Robinet à diaphragme selon la revendication 1, dans lequel ladite partie d'actionnement de robinet (45) comprend un arbre fileté mis en prise par filet avec ledit collier (38) monté sur le côté dudit corps de robinet (11) et une poignée (39) actionnée pour entraîner ledit arbre fileté (38) en rotation, et ledit arbre fileté (38) sert comme ledit arbre d'actionnement.
